# EUROPEAN PATENT APPLICATION

(11) **EP 0 724 830 A1**
(43) Date of publication of application: **07.08.1996**
(21) Application number: 96300413.0
(22) Date of filing: 22.01.1996
(51) Int. Cl.: A01K 95/02

(54) **Fishing aid for placing micro-shot on a fishing line**

(30) Priority: 01.02.1995 GB 9501971; 06.07.1995 GB 9513789
(71) Applicant: Keane, Raymond, Surrey KT17 2PR (GB)
(72) Inventor: Keane, Raymond, Surrey KT17 2PR (GB)
(74) Representative: Pedder, James Cuthbert

(57) **Abstract**

A fishing aid (1)for placing micro-shots on a fishing line comprises feeding means (27) for feeding a micro-shot to an operating region, forming means (33) in the operating region for forming a slit in the micro-shot, a plunger (7) reciprocable in a drive bore (5) for pushing the micro-shot past the slot forming means (33) and to a crimping region, and crimping means 35 at said crimping region for crimping the formed micro-shot on to the fishing line.

## Description

This invention relates to a fishing aid for placing micro-shots on to a fishing line.

In the sport of fishing, it is necessary to attach weights to the fishing line so that it takes up the required position in the water. This is usually achieved by placing on the fishing line a small number of weights or micro-shots which are usually made of lead or similar materials.

Due to the very small size of these micro-shots, they are difficult to handle and can readily become lost with possible deleterious effects on the local wild life who may mistakenly swallow the shots with consequent damage to their insides.

The present invention seeks to provide a fishing aid for the placing of micro-shots on a fishing line which provides for a minimum handling of the micro-shots and rendering them easily attached to the fishing line without significant danger of their becoming lost.

According to the invention, there is provided a fishing aid for placing micro-shots on a fishing line comprising feeding means for feeding a micro-shot to an operating region, slot forming means in the operating region for forming a slit in the micro-shot, drive means for pushing the micro-shot past the slot forming means and to a crimping region, and crimping means at said crimping region for crimping the formed micro-shot on to the fishing line characterised in that the drive means comprises a plunger reciprocable in a drive bore.

Preferably the fishing aid comprises a body in or on which the various means are positioned.

The body may have a feed opening through which micro-shots can be fed into the feeding means and a micro-shot reservoir may be located on the body over a feed opening in the body , the reservoir having a delivery opening which aligns with the feed opening in the body.

The feeding means for feeding the micro-shot to the operating region may comprise a bore located in the body along which the micro-shot can drop, slide or roll and which extends from the feed opening adjacent to the reservoir to the operating region.

The slot forming means may comprises a blade which is situated in the path of the shot on its movement from the feeding means to the crimping means and the plunger may be slotted so as to allow it to pass the blade when pushing the shot therepast.

The crimping means may comprises a channel limited on one side by a rigid wall and on the opposite side by a sprung wall for retaining the shot in position and moveable towards the rigid wall so as to provide the required crimping action on the micro-shot. The channel may be arranged to be moveable between a first position in which is it aligned with the drive bore so that continued forward movement of the drive plunger will push the micro-shot out of the drive bore and into the channel, and a second position at right angles to said first position in which the sprung wall is located across the line of the drive bore.

The channel may be open in an upper region so that a line on which the micro-shot is to be mounted can be inserted into the channel so as to be located in the formed slit in the micro-shot. The travel of the plunger may be such that, when the channel is in its second position, it can be pressed against the sprung wall to push the sprung wall towards the rigid wall and crimp the micro-shot.

Alternatively, the crimping means may be operated independently of the drive means. Here, a groove may be provided, aligned with the drive bore, the groove being open upwardly to allow the insertion of the line and having one side moveable towards the other side so as to crimp the shot to the line. A second plunger may be provided for actuating the movable wall.

The invention will now be described in greater detail by way of example, with reference to the drawings in which :-
FIG 1 is a side view of a first embodiment of a fishing aid in accordance with the invention;
FIG 2 is a vertical sectional view taken along the centre line of the embodiment of the fishing aid shown in FIG 1;
FIGS 3 and 4 show, in horizontal section, the arrangement of the crimping means in its first and second positions;
FIG 5 is a schematic view of a second form of fishing aid in accordance with the invention, and
FIG 6 is a view enlarged compared to FIG 1 of the crimping means located on the exterior of the body of the fishing aid shown in FIG 5.

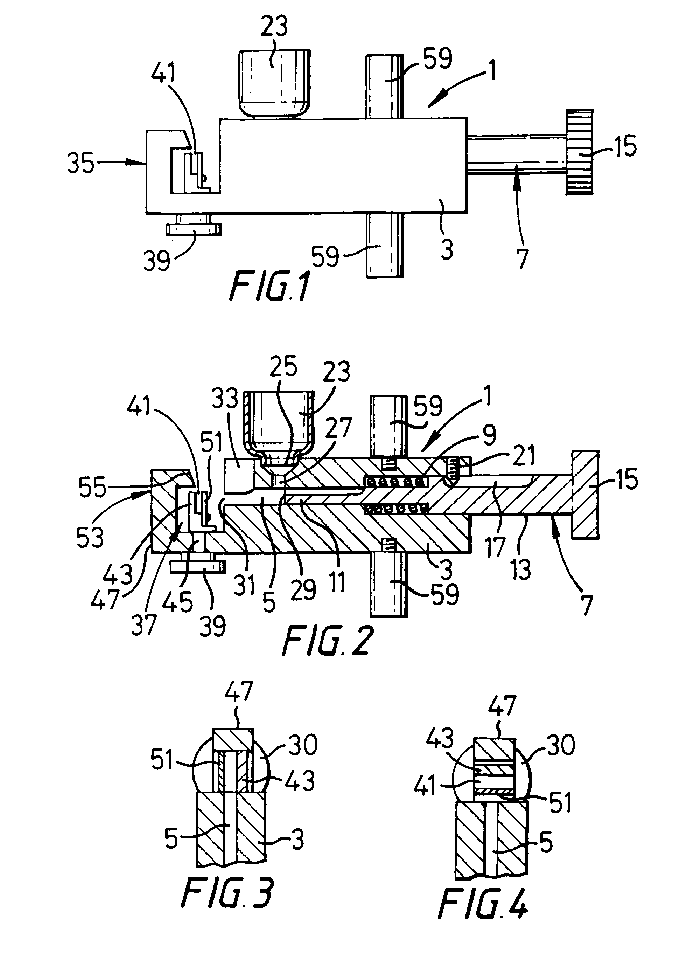

Referring firstly to FIGS 1 to 4, a fishing aid 1 for placing micro-shot on a fishing line comprises a body 3 having a longitudinal drive bore 5 located therein. This drive bore 5 forms a bore for the micro-shot. Located in this bore 5 is a plunger 7, spring urged in a rightward direction as seen in the drawings by a spring 9 and including an operating part 11, a drive stem 13 and an operating head 15. The drive stem 13 suitably fitted with a slot 17 into which a grub screw 21 projects in order to prevent rotation of the plunger 7 for a reason which will become apparent hereafter. The body 3 carries a reservoir 23 for containing a supply of micro-shot and is coupled to the body 3 at an inlet opening 25 at the outside of the body 3 to a feed bore 27 extending to the drive bore 5. As can be seen from FIG 2, in the starting position of the plunger 7, its front end 29 resides directly adjacent to the feed bore 27 from the reservoir 23 but immediately to the rear thereof in the direction of travel of the plunger 7 so that a micro-shot passing down from the reservoir 23 can be positioned directly in front of the plunger 7.

Towards the ejection end 31 of the drive bore 5, there is situated a knife blade 33 which extends into the bore 5 to approximately half its diameter and this blade 33 will cut a slit into the micro-shot as it is forced therepast by operation of the plunger 7. It will be observed that once the plunger 7 has moved forwards, its dimensions are such as to fill the drive bore 5 and therefore prevent further micro-shots from being fed from the reservoir 23 into the bore 5.

Located at the ejection end 31 of the drive bore 5 is a crimping means 35 which consists of a rotatable crinping mechanism 37 rotatable between two positions at 90 degrees to each other (as shown in FIGS 3 and 4) by means of an operating knob 39. The crimping mechanism 37 itself comprises an open top channel 41 into which the micro-shot can be pushed when the crimping mechanism 37 is in its first position (FIG 3). To this end, the channel 41 is formed by a rigid wall 45 on one side formed in a single piece with a rod 45 passing through a bore in an extended portion 47 of the main body 3 by means of which it is rotated. A spring strip 51 is attached to the base part of the channel 41 so as to provide a moveable wall for crimping purposes. As will be seen, the rigid wall 43 is basically in the forn of an L shaped arrangement in which the leg of the L forms the side of the channel 41 whereas the base of the L forms the base of the channel 41. It will be observed that the upper part 53 of the housing extension 47 is provided with an inclined surface 55 extending towards the channel 41 in the second position (FIG 4) to provide guidance for the fishing line which is to be inserted into the slot formed in the micro-shot.

Once the shot has been pushed into the channel 41 of the crimping mechanism 37, the plunger 7 is allowed to retract into the main body 3 so as to enable the crimping mechanism 37 to be rotated from its first position in FIG 3 to its second position in FIG 4. In this position, once the line has been inserted into the micro-shot, the plunger 7 is again further depressed so as to push the spring strip 51 against the micro-shot so as to close the slot in the micro-shot around the line. To assist in the operation of the plunger 7, two finger rods 59 are provided.

The operation of the above described embodiment of the fishing aid will now be described:- Before starting operations, the reservoir 23 is loaded with the non-formed micro-shots. This may be done with the reservoir 23 attached to the aid 1, if desired, away from the aid 1 so that a number of reservoirs 23, for example for different shot, may be provided and may be attached as required. Once the reservoir 23 has been placed in position on the body 3, the first micro-shot will be fed from the reservoir 23 by the action of gravity down the feed bore 27 into the drive bore 5. In this position, it is located immediately in front of the plunger 7 and the plunger 7 can then be actuated against the action of the spring 9 in order to move micro-shot along the drive bore 5. The micro-shot is forced past the forming blade 33 which cuts or otherwise forms a slot in the micro-shot, further movenent of the plunger 7 causing the micro-shot to be ejected from the ejection end 31 of the main body 3. At this point, the crimping device 35 is located in its first position so that the channel 41 is aligned with the ejection end opening of the main body 3 and further movement of the plunger 7 will push the micro-shot into the channel 41 where it is held by virtue of the spring strip 51 in the correct orientation for further operation.

Then the plunger 7 is released to an extent to enable the end 29 of the plunger 7 to retreat into the body 3 so as to clear the channel 41 in the crimping means 35, care being taken not to release the plunger 7 completely so as to avoid a second shot being fed from the reservoir 23 into the drive bore 5. The crimping mechanism 37 is then rotated from its first position (FIG 3) to a second position (FIG 4) in which the channel 41 is located at right angles to the line of the drive bore 5 with the spring strip 51 of the channel 41 facing the ejection opening of the main body 3. The device is now ready for the insertion of the line into the micro-shot and this is achieved by sliding the line down the inclined guide surface 55 and into the channel 41 in which position it is aligned with the shot. Care is taken to pull the line fully into the shot whereupon the plunger 7 is once again depressed to push on the spring strip 51 and so to crimp the micro-shot on to the line.

It will be noted that the travel of the plunger 7 is limited so as to provide just the right crimping action on the micro-shot so that, while the micro-shot is successfully attached to the line, it is possible to slide the micro-shot along the line to various positions as required.

Once the crimping has been completed, the line is moved sideways to move the shot out of the channel 41 whereupon the line itself can be removed from the channel 41. The plunger 7 having been allowed to return to its initial position once the crimping has been completed, then allows the next micro-shot to be fed from the reservoir 23 into the drive bore 5 so that the procedure can then be gone through again with a second and further micro-shots.

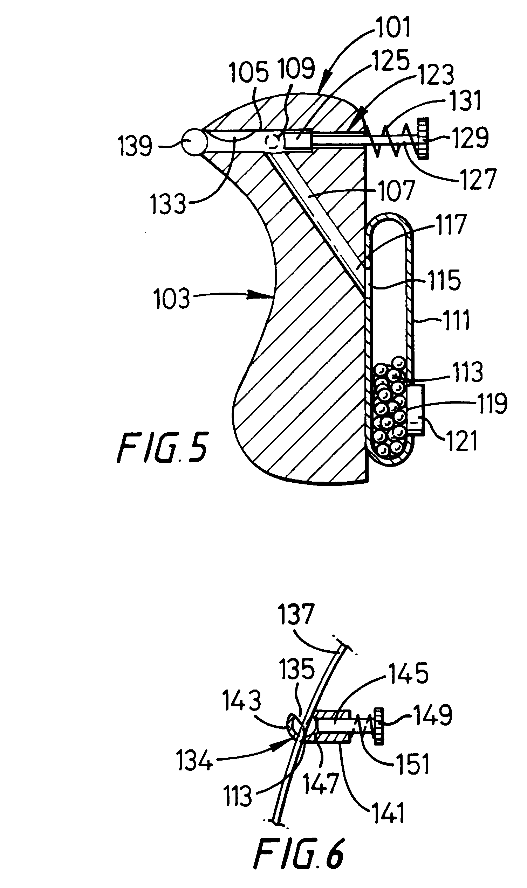

A second embodiment of the invention is shown in FIGS 5 and 6. In these figures, a fishing aid for placing a micro-shot on a fishing line comprises a body 103 having a pair of bores 105 and 107 located therein, the first bore 105 extending from one side of the body 103 to the other and forming a working channel for the device. The second bore 107 extends from a position on the outside of the body to the middle part of the first bore 105, that part of the bore constituting an operating region 109.

On the exterior of the body 101 is provided a shot reservoir 111, for containing the micro-shot 113 and having an outlet aperture 115 which mates with the inlet or feed aperture 117 of the bore 107 so as to enable micro-shot 113 contained in the reservoir 111, to be transported along the bore 107, constituting a feed bore, to the operating region 109 of the device.

In order to enable the reservoir 111 to be refilled, the reservoir 111 is suitably formed with an inlet opening 119 which is closed when the device is in use by means of a cap 121. Located in the cross bore 105 is a spring loaded plunger 123 provided with a head portion 125 for engagement with micro-shot 113 located in the operating region 109. The head 125 is carried on a stem 127 which extends outside of the body and ends in an operating knob 129 which enables it to be actuated by an operator as will be described hereafter. As can be seen, the plunger 123 is provided with a spring 131 which acts between the exterior of the body 103 and the operating knob 129 so as to spring urge the plunger 123 into the retracted position as shown in FIG 1. It should also be observed that the head 125 of the plunger will need to be grooved to allow it to pass the blade 133.

In front of the operating region 109, in the direction in which the micro-shot 113 must move in order to leave the device, there is located a stationary blade 133 which is adapted to cut or form a slot in the micro-shot 113 into which a fishing line will be placed so that the micro-shot 113 can be crimped around the fishing line. As can be seen from FIG 2, the slot 135 formed in the micro-shot 113 is suitably of a sector shape thus, making it easy to insert the fishing line 137 and enabling a proper crimping action to take place.

In front of the blade 133 and situated on the end of the bore 105 to the outside of the body 103 is located the crimping mechanism 139 for crimping the micro-shot 113 to the fishing line 137. To this end it comprises a body 141 having a groove therein, one side of the groove being formed as a stationary jaw 143 of a shape suitably complementary to the shape of the micro-shot 113. This stationary jaw 143 is attached to the remainder of the body which is of a hollow nature and locates a rod 145 to which is attached a moveable jaw 147 at one end and a operating knob 149 at the other end. As can also be seen, the moveable jaw 147 is biased into its open position by means of a spring 151 which acts between the body 141 and the operating knob 149. When the operating knob 149 is depressed, the jaws 143, 147 will approach each other thus, causing the slot 135 in the micro-shot 113 to close, thus crimping it around the fishing line 137 if the fishing line is placed in the slot 135.

The operation of the second embodiment of the fishing aid which has just been described will now be considered:-

Firstly, a number of micro-shots 113 are placed in the reservoir 111 by removal of the cap 131 and the device is then ready for use. In order to transfer the micro-shot 113 to the operating region 109, the device is turned upside down and is shaken as necessary so that a shot 113 will pass from the reservoir 111 down the feed bore 107 to the operating region 109 under the action of gravity. In order to determine when a shot 113 has arrived in the correct position, a window (not shown) may be positioned over the operating region 109 so that the presence of a micro-shot 113 in that region can be detected. While continuing to hold the device in this position, so that the shot 113 cannot return to the reservoir 111, the operating knob 129 of the plunger 123 is depressed so as to push the micro-shot 113 into the left hand portion of the bore 105 whereupon the device can be righted.

Further pressure on the operating knob 129 of the plunger 123 will force the micro-shot 113 past the blade 133 so as to form a suitable slot 135, as previously described, in the micro-shot 113 and further pressure of the operating knob 129 will push the micro-shot 113 into the crimping mechanism 139 in the correct orientation for receiving a fishing line 137. Once in this position, the operating knob 129 of the plunger 123 is released so that the plunger 123 returns to its starting position as shown in FIG 1.

With the shot 113 between the jaws 143, 147 of the crimping mechanism 139, the fishing line 137 is laid in the slot 135 provided in the micro-shot 113 and the operating knob 149 of the crimping mechanism 139 is pushed inwards so as to move the jaws 143, 147 together and thus close the slot 135 around the fishing line 137 so as to secure it thereto. Release of the operating knob 149 will cause the moveable jaw 147 to open under the action of the spring 151 thus releasing the micro-slot 113 for removal with the line 137.

The operation will be repeated thereafter to provide micro-shots 113 on further parts of the fishing line 137.

It will be understood that the above described embodiments can be modified or added to without departing from the scope of the invention. For example, in the first embodiment, the rotary crimping mechanism 37 may be provided with spring detent arrangements so as to locate the crimping mechanism 37 in its two positions sufficiently firmly so that rotation of the crimping mechanism 37 by accident is not possible. The rotation of the crimping mechanisn 37 could be operated by a ratchet instead of the physical provision of an actuating knob 39, the backward movement of the plunger 7 once the insertion of the shot into the channel 41 has been achieved operates to rotate the crimping mechanism 37 from its first position to its second position. Automatic return of the crimping mechanism 37 from its second position to its first position could be provided by the return of the plunger 7 to its starting position.

In order to avoid the necessity of holding the plunger 7 partially forwarding during the insertion of the line into the channel 41 of the crimping device 35, the spring return could be arranged so as to only provide a return of the end of the plunger 7 into the body 3, the plunger 7 then being pulled back manually after the end of the operation so as to "recock" the device to allow the next micro-shot to proceed from the reservoir 23 into the drive bore 5.

In yet a further alternative arrangement, instead of providing for a spring return, the plunger 7 could be spring operated in a forward direction actuated by means of a trigger, the return then being provided manually. Instead of the illustrated gravity feed of the shots, a carousel arrangement could be provided with a plurality of stations in which, at a first station, a shot is loaded from the reservoir 23. The carousel then moves on to a second station in which the forming operation takes place after which its moves on to a third station in which crimping takes place. By this method, a continuous operation of micro-shot formation and attachment can be carried out, the feeding of a micro-shot into the carousel, the forming of a preceding micro-shot and the crimping of a still further preceding shot being carried out in one operation.

Provision may also be made for disposal of any material removed from the micro-shot so as to avoid this material from jamming any part of the mechanism.

Furthermore, in the second embodiment, the reservoir 111, instead of being provided on the side of the body 103 as shown in FIG 5, it may be located on the top of the body with the bore extending downwardly therefrom to the operating region, thus avoiding the necessity of reversing the device in order to feed the shot. With this arrangement, the shot will line up in the bore so as to provide an automatic feed to the operating region each time a shot is passed through the transverse bore into the crimping mechanism. To this end, it will be necessary that the rod of the plunger is of a sufficient size to fill the bore so as to ensure that there is no attempt to load a micro-shot behind the plunger when the plunger moves past the bore.
A mechanism may be provided so that the plunger is operated by a trigger mechanism so that the device works like a pistol. A second mechanism may also be provided for actuating the crimping device and this may take the form of a second trigger operation i.e. two triggers being provided, or the crimping mechanism may operate on a further movement of a single trigger.

This dual operation of a single trigger, may either take the form of first and second pressures as are provided in the field of fire arms or the mechanism may be such that a first operation of the trigger feeds the micro-shot to the crimping mechanism after which it is released and a second operation of the trigger will then operate the crimping mechanism.

Means may be provided to adjust the mechanisms so that it can operate with a number of different sizes of shot so as to avoid the necessity of having to have a separate device for each size of shot being used. To this end, the position of the blade may be adjustable to the size of shot as may the spacing of the jaws of the crimping mechanism. Furthermore, the device may come with a plurality of reservoirs one for each of the different sizes of shot, the appropriate reservoir being attached to the device as required. To ensure that no shots remain in the device of a different size from the ones which are intended to be used, the device may be reversed in order to ensure that any shots which remain in the feed bore are returned to the reservoir. Alternatively, the reservoir outlet may be seated immediately adjacent to the operating region, the feed bore being omitted, the arrangement being such that the reservoirs are only changed when the plunger is in a position blocking the exit to the reservoir so as to ensure that a different size of shot does not remain in the operating region.

It will be appreciated that the above described embodiments provide a fishing aid by means of which a micro-shot can be placed on a fishing line simply without significant risk of losing the micro-shot and with various degrees of automation.

## Claims

1. A fishing aid for placing micro-shots on a fishing line comprising feeding means **(27, 107)** for feeding a micro-shot to an operating region, slot forming means **(33,133)** in the operating region for forming a slit in the micro-shot, drive means **(7, 127)** for pushing the micro-shot past the slot forming means **(33, 133)** and to a crimping region, and crimping means **(35, 139)** at said crimping region for crimping the formed micro-shot on to the fishing line **characterised in that** the drive means comprises a plunger **(7, 127)** reciprocable in a drive bore **(5, 105)**.

2. A fishing aid as claimed in claim 1, characterised in that the fishing aid comprises a body **(3, 103)** in or on which the various means are positioned.

3. A fishing aid as claimed in claim 2, **characterised in that** the body **(3, 103)** has a feed opening **(25, 117)** through which micro-shots can be fed into the feeding means **(27, 107)** and a micro-shot reservoir **(23, 111)** is located on the body **(3, 103)** over the feed opening **(25, 117)** in the body **(3, 103)**, the reservoir **(23,111)** having a delivery opening which aligns with the feed opening **(25, 117)** in the body **(3, 103)**.

4. A fishing aid as claimed in claim 2 or 3, **characterised in that** the feeding means for feeding the micro-shot to the operating region comprises a bore **(27, 107)** located in the body **(3, 103)** along which the micro-shot can slide or roll and which extends from the feed opening **(25, 117)** adjacent to the reservoir **(23, 111)** to the operating region.

5. A fishing aid as claimed in claim 2, 3 or 4, **characterised in that** the slot forming means comprises a blade **(33, 133)** which is situated in the path of the shot on its movement from the feeding means **(27, 107)** to the crimping means **(35, 139)**.

6. A fishing aid as claimed in claim 5, **characterised in that** the plunger **(7, 127)** is slotted so as to allow it to pass the blade **(33, 133)** when pushing the shot therepast.

7. A fishing aid as claimed in any one of claims 2 to 6 **characterised in that** the crimping means **(35)** comprises a channel **(41)** limited on one side by a rigid wall **(43)** and on the opposite side by a sprung wall **(51)** for retaining the shot in position and moveable towards the rigid wall **(43)** so as to provide the required crimping action on the micro-shot.

8. A fishing aid as claimed in claim 7, **characterised in that** the channel **(41)** is arranged to be moveable between a first position in which is it aligned with the drive bore **(5)** so that continued forward movement of the drive plunger **(7)** will push the micro-shot out of the drive bore **(5)** and into the channel **(41)**, and a second position at right angles to said first position in which the sprung wall **(51)** is located across the line of the drive bore **(5)**.

9. A fishing aid as claimed in claim 6, 7 or 8, **characterised in that** the channel **(41)** is open in an upper region so that a line on which the micro-shot is to be mounted can be inserted into the channel **(41)** so as to be located in the formed slit in the micro-shot.

10. A fishing aid as claimed in claim 8 or 9, **characterised in that** the travel of the plunger **(7)** is such that, when the channel **(41)** is in its second position, it can be pressed against the sprung wall **(51)** to push the sprung wall **(51)** towards the rigid wall **(43)** and crimp the micro-shot.

11. A fishing aid as claimed in any one of claims 2 to 6, **characterised in that** the crimping means **(139)** are operated independently of the drive means **(127)**.

12. A fishing aid as claimed in claim 11, **characterised in that** a groove is provided, aligned with the drive bore **(105)**, the groove being open upwardly to allow the insertion of the line **(137)** and having one side wall **(147)** moveable towards the other side **(143)** so as to crimp the shot **(139)** to the line **(137)**.

13. A fishing aid as claimed in claim 12, **characterised in that** the a second plunger **(145)** is provided for actuating the movable wall **(147)**.
